# EUROPEAN PATENT APPLICATION

(11) **EP 3 597 405 A1**
(43) Date of publication of application: **22.01.2020**
(21) Application number: 18184309.5
(22) Date of filing: 18.07.2018
(51) Int. Cl.: B29C 64/277, B33Y 10/00, B33Y 30/00, B29C 64/153, B22F 3/105

(54) **APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Hunze, Stephan, 01796 Pirna (DE); Dr. Eichenberg, Boris, 96215 Lichtenfels (DE)
(74) Representative: Hafner & Kohl Patent- und Rechtsanwälte Partnerschaft mbB

(57) **Abstract**

Apparatus (1) for additively manufacturing three-dimensional objects (2) by means of successive layerwise selective irradiation and consolidation of layers of a build material (3) which can be consolidated by means of an energy beam, wherein an irradiation device (4) is provided that is adapted to generate at least two coherent energy beams (7), wherein the irradiation device (4) comprises a modulation unit (5) that is adapted to combine the at least two energy beams (7) to a combined energy beam (8) and to adjust at least one combined beam property of the combined energy beam (8).

## Description

The invention relates to an apparatus for additively manufacturing three-dimensional objects by means of successive layerwise selective irradiation and consolidation of layers of a build material which can be consolidated by means of an energy beam.

Apparatuses for additively manufacturing three-dimensional objects that comprise irradiation devices that are adapted to generate and guide an energy beam across the build plane in which build material is arranged to be selectively, successively and layerwise irradiated, are generally known from prior art. Usually, an energy source is provided that generates the energy beam, wherein the irradiation device comprises a beam guiding unit, for example a scanning unit comprising at least one movable mirror, that allows for guiding the energy beam onto the build plane and guiding the spot of the energy beam in the build plane or across the build plane, respectively.

The irradiation process can therefore, be limited by the beam guiding unit, i.e. the irradiation device, as the movement of the energy beam across the build plane depends on the movement of the scanning unit, for example the maximum movement speed or the inertia of a movable mirror may limit the movement of the energy beam. Hence, irradiating specific patterns may be difficult, in particular patterns including sharp edges or in which fast movements of the energy beam in the build plane have to be performed, as, for example, the mechanical scanner (mirror) is limited, e.g. by inertia and position noise . Further, the geometry of the spot of the energy beam, such as the shape or the energy distribution in the build plane can only be varied by including, removing or otherwise varying specific optical components in the beam path of the energy beam. To vary the power or the intensity settings of the energy beam, e.g. for generating an adequate intensity distribution, it is further known to vary the spot size and therefore, vary the energy input per area of the build plane. It is also known to vary the energy output or the intensity with which the energy beam is generated in the energy source. Further, the energy source that is used in the additive manufacturing process usually is only suitable for a defined range of energy that is required to irradiate the build material. Otherwise, energy could be wasted, as filter units could be used to decrease the intensity of the energy beam to match the requirements of the irradiation process, for instance.

It is an object of the invention to provide an apparatus for additively manufacturing three-dimensional objects, wherein the irradiation of build material is improved, in particular the adjustment of the geometry and the movement of the energy beam are improved.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy beam, in particular a laser beam. A respective build material can be a metal, ceramic or polymer powder. A respective energy beam can be a laser beam. A respective apparatus can be an apparatus in which an application of build material and a consolidation of build material is performed separately, such as a selective laser sintering apparatus or a selective laser melting apparatus for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the inventive additive manufacturing apparatus comprises an irradiation device that is adapted to generate the energy beam used to selectively irradiate the build material and thereby additively build the three-dimensional object in the additive manufacturing process. The invention is based on the idea that an irradiation device is provided that is adapted to generate at least two coherent, in particular coherently stimulated, energy beams, wherein the irradiation device comprises a modulation unit that is adapted to combine the at least two energy beams to a combined energy beam and to adjust at least one combined beam property of the combined energy beam. Thus, at least two separate energy beams are generated via the at least two irradiation elements which separate energy beams are combined to one combined energy beam via the modulation unit.

Hence, an arbitrary number of irradiation elements can be provided, wherein the modulation unit is adapted to combine the energy beams that are generated via the plurality of coherent irradiation elements to one combined energy beam. For example, it is possible to adjust the number of energy beams that are generated via the available irradiation elements dependent on the energy or the intensity of the combined energy beam that is required in the additive manufacturing process. Thus, the combined energy beam is used to irradiate build material, as described before, wherein the modulation unit grants flexibility regarding the combined energy beam, as more or less energy beams generated via respective irradiation elements, can be included in or used for the composition of the combined energy beam. Hence, the proper amount of energy can be deposited in the build material via the combined energy beam, as the intensity or the power, respectively, of the combined energy beam can be adjusted by combining the proper amount of energy beams via the modulation unit. As the modulation unit is adapted to coherently combine the at least two energy beams to the combined energy beam, the additive manufacturing apparatus may be deemed to be adapted to perform a so-called "coherent beam combining". The term "parameter" or "combined beam property" may relate to any arbitrary parameter or parameter set of the energy beam, in particular the combined energy beam. The term may further relate to a single parameter out of a plurality of parameters forming a parameter set.

The combined energy beam therefore, comprises at least one combined beam property, for example the intensity or the power of the combined energy beam, wherein the modulation unit is adapted to adjust the combined beam property of the combined energy beam. Of course, the combined energy beam can be represented by a combined parameter set, for example a spot geometry, a focal position, the power or the intensity of the combined energy beam, and the like. Preferably, the modulation unit is adapted to adjust the at least one combined beam property by an adjustment of at least one parameter of the modulation unit. The term focal position may refer to a reference position in which a desired intensity distribution is achieved, e.g. a point or an area in the build plane to which the energy beam is focused.

The modulation unit may be adapted to adjust a parameter of the modulation unit, for example a structural parameter of the modulation unit being built as or comprising at least one diffractive optical element, in particular a spatial light modulator. Thus, the irradiation pattern that is generated via the combined energy beam, i.e. the combination of the at least two energy beams generated via the at least two irradiation elements, can be influenced via the modulation unit, in particular via the adjustment of at least one parameter, such as a structural parameter, for example the lattice constant, of the modulation unit. Therefore, it is possible to vary the intensity or the power of the combined energy beam via an adjustment to the parameter of the modulation unit, wherein the irradiation pattern resulting in the build plane may be generated based on the interference of the at least two energy beams combined via the modulation unit.

Alternatively, it is possible that the modulation unit may be built as or may comprise an optical phased array. Hence, multiple coherent energy beams are phase-locked via a common seed laser, may be divided into multiple energy beams (laser beams). Each of the multiple energy beams may be phase modulated via a corresponding phase modulator, e.g. a waveplate or a retarder or an electro optical modulator or an acousto- optical modulator. Afterwards, the individual energy beams may be combined, preferably via a suitable combining unit, e.g. an optical lens (assembly). Due to the combination of the individual energy beams and interference pattern is generated in areas in which the energy beams overlap. Thus, the individual energy beams can coherently be combined in the far field. Advantageously, the irradiation pattern, i.e. the intensity distribution, in particular the position and the shape of the spot in the build plane, can be controlled by controlling the individual phases of the individual energy beams.

The irradiation pattern can be controlled by controlling the individual phases of the phase modulators of the modulation unit. Thus, the intensity distribution in the build plane can be dynamically controlled via the phases of the individual phase modulators. Additionally or alternatively, it is also possible to move the intensity distribution, i.e. the irradiation pattern that is generated via the irradiation device via the beam guiding unit. Hence, a (static) irradiation pattern may be generated that can be moved over the build plane by the beam guiding unit. Of course, it is also possible to combine the static and dynamic generation of the irradiation pattern by controlling the phases via the individual phase modulators of the modulation unit and overlay movement of the irradiation pattern over the build plane via the beam guiding unit.

Further, the shape of the spot of the combined energy beam in the build plane, can be adjusted by adjusting the at least one parameter of the modulation unit. This particularly allows for performing advanced irradiation patterns that already form the irradiation pattern that is desired and do not require the movement of a single spot of the energy beam along the writing path to irradiate the respective irradiation pattern into the build material. Instead, the generation of a specific intensity distribution of the combined energy beam is feasible reducing the effort of moving the combined energy beam along a defined writing path across the build plane.

Therefore, the suggested embodiment allows for generating a specific intensity distribution in the build plane via an adjustment of at least one parameter of the modulation unit and adjusting the intensity distribution achieved via the combined energy beam in the build plane via varying the at least one parameter of the modulation unit, such as a structural parameter of the modulation unit. Preferably, the modulation unit is adapted to position at least one part of the combined energy beam in the build plane via an adjustment of the structure of the modulation unit.

According to another embodiment of the inventive apparatus, the modulation unit may be adapted to adjust the at least one combined beam property over a defined length of the beam path of the combined energy beam, in particular over essentially the entire length of the energy beam path from the modulation unit to the build plane. Hence, the term "writing path" in the scope of this application may refer to the path along which the "spot" of the combined energy beam, i.e. any arbitrary intensity distribution in the build plane caused by the combined energy beam, is moved in the build plane or across the build plane, respectively. In other words, the term "writing path" may refer to the pattern along which the combined energy beam is guided for irradiating the build material that is arranged in the build plane. The term "beam path" describes the path along which the combined energy beam is guided through several components of the additive manufacturing apparatus, from the modulation unit to the build plane, i.e. the optical train. In other words, the term "beam path" of the combined energy beam describes the path along which the combined energy beam is guided throughout the optical system of the additive manufacturing apparatus to be incident on the build plane. According to this embodiment, the modulation unit may be adapted to adjust at least one combined beam property, for example a defined intensity distribution, a geometrical shape of the spot of the combined energy beam or a focal position of the energy beam over a defined length of the beam path, preferably over the entire beam path. In other words, it is not necessary to define a position, i.e. a distance from the modulation unit, in which a desired combined beam property is achieved, but it is possible to generate the combined energy beam via the modulation unit in that the adjusted combined beam property is available over a defined length, for example essentially the entire length of the beam path.

This allows for generating the combined energy beam with the combined beam property for multiple focal positions, in other words for multiple distances from the modulation unit, wherein the desired combined beam property may be achieved for the combined energy beam being incident in the build plane. In other words, the combined beam property may be adjusted defining the combined energy beam being incident in the build plane, for example a defined intensity distribution that can be adjusted to be incident in the build plane for irradiating build material.

Further, the modulation unit may be adapted to compensate deviations or differences of the combined beam property from a reference beam parameter in at least one position, in particular at least two positions, of the build plane. Thus, the modulation unit may be adapted to adjust the combined beam property to remove differences between a combined beam property and a reference beam parameter for at least one, in particular at least two positions of the build plane. The reference beam parameter may refer to a desired or nominal beam parameter, such as the focal position of the combined energy beam, whereas the combined beam property may refer to the actual beam parameter of the combined energy beam that describes or defines the combined energy beam, such as an actual focal position of the combined energy beam. The embodiment particularly allows for compensating deviations or differences between the combined beam property and the reference beam parameter, for example to compensate an elliptical behavior of the spot of the energy beam that depends on the angle of incidence of the combined energy beam on the build plane. The compensation of the deviation of the difference may for example be performed for two different positions in the build plane, for example two positions in which the combined energy beam is incident under different angles on the build plane.

The at least one combined beam property may for example relate to an intensity of the combined energy beam and/or an intensity distribution of the combined energy beam and/or a geometrical parameter, in particular a spot size and/or a spot shape, of the combined energy beam and/or a position of the combined energy beam, in particular the position of a spot of the combined energy beam in a build plane, and/or a focal position of the combined energy beam and/or a polarization parameter of the combined energy beam. As described before, the term "spot" of the combined energy beam may particularly refer to the energy distribution of the intensity distribution that is achieved with the combined energy beam being incident in the build plane. Thus, it is possible to adjust various combined beam properties, i.e. parameters of the combined energy beam, that define the combined energy beam that is incident on the build plane to selectively irradiate the build material to build the three-dimensional object. It is particularly possible to adjust the combined beam properties during the additive manufacturing process, i.e. during one irradiation step. For example, by an adjustment of at least one parameter of the modulation unit, for example a structural parameter of the modulation unit, it is possible to adjust the combined energy beam being incident in the build plane.

Additionally or alternatively, it is also possible that the modulation unit is adapted to adjust the at least one combined beam property by adjusting the at least one beam parameter of at least one of the at least two energy beams. Thus, it is additionally or alternatively possible to adjust at least one beam parameter of one of the two energy beams that are generated via the separate irradiation elements. Hence, the single energy beams that are combined to the combined energy beam can individually be adapted or adjusted via the modulation unit before they are combined to the combined energy beam. Generally, the same beam parameters can be adjusted for the energy beams that can be adjusted via the modulation unit for the combined beam property, as described before.

The modulation unit may, for example, be built as or comprise at least one controllable diffractive optical element, in particular at least one spatial light modulator. Thus, it is possible to use a spatial light modulator to spatially vary (the modulation of) the combined energy beam, in particular in a pixel wise manner. Using a diffractive optical element, in particular a spatial light modulator allows for generating interference patterns, in particular irradiation patterns in the build plane via the combined energy beam. Thus, beam shaping and beam combining can be performed via the modulation unit, as described before.

The inventive apparatus can further be improved in that at least one modulation element may be provided which is adapted to adjust at least one beam parameter of at least one energy beam generated by an irradiation element or in that at least one irradiation element is adapted to adjust the intensity of the energy beam generated via the irradiation element in advance to the modulation unit. Therefore, the beam parameter of the at least one energy beam which is generated by a respective irradiation element can be adjusted via a modulation element or the irradiation element that generates the energy beam. For example, the modulation element may be arranged in advance to the modulation unit, wherein the energy beam that is generated by the corresponding irradiation elements can be adjusted via the modulation element, and the energy beam can be combined with at least one other energy beam via the modulation unit. It is also possible that a first irradiation element generates a first energy beam comprising the desired or nominal beam parameter and that the modulation unit combines the first energy beam resulting from the first irradiation element with the other energy beams from other irradiation elements. Of course, any arbitrary irradiation element can be used which is adapted to generate an energy beam with a defined beam parameter. Further, multiple different irradiation elements or the same irradiation elements generating energy beams with different or the same beam parameters can be combined via the modulation unit.

According to another embodiment of the inventive apparatus, a beam guiding unit may be provided that is adapted to guide the combined energy beam in the build plane, wherein a control unit may be provided that is adapted to combine, in particular to overlay, a movement of the combined energy beam generated via the modulation unit, in particular a wobble movement, and a movement of the combined energy beam generated via the beam guiding unit. As described before, the combined energy beam can be guided via the modulation unit, in particular via an adjustment of the intensity distribution that is achieved in the build plane. In other words, the intensity distribution can be adjusted via the modulation unit in that a discrete position of a spot of the energy beam can be achieved in the build plane. It is also possible to provide a separate beam guiding unit, for example a scanner unit, such as a movable mirror, from which the combined energy beam is reflected onto the build plane. This allows for moving the spot of the energy beam or the intensity distribution achieved with the combined energy beam in the build plane, across the build plane. Of course, the movement of the combined energy beam achieved with the beam guiding unit and with the modulation unit can arbitrarily be combined or used separately. For example, the movement that is achieved with the modulation unit can be used to irradiate sharp structures, such as sharp corners and sharp edges into the build material, whereas the beam guiding unit can be used to perform continuous movements of the combined energy beam in the build plane, such as a wobble movement or a linear movement of the intensity distribution. The described embodiment particularly allows for realizing an auto focus, a sharp edge guiding and fast positioning of the combined energy beam in the build plane.

The wobble movement may preferably be generated via the modulation unit , in particular with a wobble frequency of more than 5kHz, preferably more than 1 MHz. In other words, the intensity distribution is rapidly change, e.g. with respect to a spot generated in the build plane, which rapidly changing ("wobbling") intensity distribution leads to a time-averaged intensity distribution that can for example be used to heat a region in the build plane. The time-averaged intensity distribution that is generated via the modulation unit may be guided via the beam guiding unit across the build plane

As described before, it is possible to use the modulation unit to generate arbitrary intensity patterns and intensity distributions of the energy beam in the build plane. For example it is possible that the modulation unit may be adapted to generate at least two sub-parts of the combined energy beam at least partially incident in different regions of the build plane (simultaneously) and can be modified immediately. For example, in processes in which an object is to be manufactured rapidly, the energy beam can be guided with a defined power or intensity over the build plane. In regions of the irradiation pattern with edges, small curves, radii or curvatures, for instance, the energy beam has to be guided slower to assure that the irradiation pattern is properly generated. Due to the slower velocity of the energy beam, the energy input rises. Advantageously, it is possible to take this change of the energy input into calculation and adjust the intensity distribution accordingly, for example by using at least one part of the energy beam in a different region of the build plane simultaneously.

For example, at least one sub-part of the combined energy beam may be guided via the modulation unit in advance to a central part of the combined energy beam for pre-heating the build material and/or at least one sub-part may be guided via the modulation unit following a central part of the combined energy beam for post-heating the build material. Of course, an arbitrary number of sub-parts may be generated and guided in advance to or following the central part of the combined energy beam, which is used to irradiate and consolidate, e.g. to melt, the build material.

Thus, the combined energy beam is generated or combined having corresponding combined beam properties that allow for a generation of two or more sub-parts of the combined energy beam. In other words, not only one single combined energy beam can be generated, but it is possible to influence the intensity distribution in the build plane in that multiple sub-parts of the combined energy beam can be positioned and/or guided via the modulation unit individually. This allows, inter alia, for moving the different sub-parts of the combined energy beam differently across the build plane, such as a pre-heating movement or a post-heating movement, wherein at least one sub-part of the combined energy beam precedes or succeeds another sub-part of the energy beam that is used to irradiate the build material.

For example a central part of the combined energy beam can be used to irradiate build material to perform the additive manufacturing process, wherein at least one sub-part of the combined energy beam can precede the center part to pre-heat the build material to improve the additive manufacturing process. At least one other sub-part of the combined energy beam can be used to post-heat the build material after the central part of the combined energy beam irradiated the build material, to control the consolidation behavior, in particular the cooling behavior of the irradiated part of the build material arranged in the build plane. As described before, any arbitrary configuration or distribution of the intensity of the combined energy beam in the build plane is feasible, for example a circular shape or multiple circles around a central part of the energy beam that can be guided individually or synchronously with the central part of the combined energy beam. In other words, it is possible to combine the at least two energy beams that are generated by separate irradiation elements to a combined energy beam, wherein the modulation unit is adapted to generate the intensity distribution that is achieved in the build plane in that multiple sub-parts of the combined energy beam are available that can be moved or positioned individually.

The at least two irradiation elements may be arranged in defined positions relative to the modulation unit, in particular arranged in directions corresponding to diffraction orders of the modulation unit. As described before, the modulation unit may be built as or comprise at least one diffractive optical element, that defines directions in which defined diffraction orders of the diffractive optical elements are arranged, such as the zero, first, second or third diffraction order, for instance. The energy beams being incident on the diffractive optical element, i.e. the modulation unit, in those diffraction orders, can be properly combined to the combined energy beam via the modulation unit. Preferably, the modulation unit and the at least two irradiation elements form a combined irradiation assembly. For example, the modulation unit and the at least two irradiation elements may be arranged in a defined spatial relationship, wherein the at least two irradiation elements are arranged in that the energy beams generated via the at least two irradiation elements can be incident in the respective diffraction orders of the modulation unit.

The modulation unit may further be adapted to control the focal position of the combined energy beam independent of the position of the focusing optical element. In other words, it is possible to control the focal position, i.e. realize an auto focus of the spot(s) of the combined energy beam, i.e. the intensity distribution of the combined energy beam in the build plane, without the need for positioning of the focusing optical element, such as a focusing lens. This is achieved by generating the intensity distribution via the modulation unit which is desired or required directly in the build plane. Of course, the additional use of focusing optical elements, i.e. an objective, to additionally magnify or reduce, i.e. zoom, is also possible, whereas, as described before, any arbitrary intensity distribution can be directly realized via the modulation unit.

The modulation unit of the inventive apparatus may further be adapted to adjust the geometry of at least one part of the combined energy beam dependent on at least one part of the irradiation pattern that is to be irradiated, in particular to adjust a spot size to a dimension of a contour that is to be irradiated. As described before, the intensity distribution that is achieved with the combined energy beam being incident on the build plane can arbitrarily be influenced or adjusted via the modulation unit. According to this embodiment, it is particularly possible to adjust the geometry of the irradiation pattern that is generated in the build plane via the combined energy beam dependent on at least one part of the irradiation pattern that is to be irradiated in the build plane. In other words, the geometry of the at least one spot of the combined energy beam can continuously be adjusted to adjust the combined energy beam to the irradiation pattern, as the combined energy beam is guided across the build plane. For example, it is possible to adjust the size of the intensity distribution of the combined energy beam, i.e. the spot size in the build plane, to a dimension of the contour of the object to be built in the additive manufacturing process.

Further, the modulation unit may be adapted to control the at least one combined beam property independent of a scan velocity. The term "scan velocity" may refer to the velocity with which the combined energy beam, i.e. the intensity distribution of the combined energy beam, such as spot of the combined energy beam, is guided across the build plane. The term "scan velocity" may refer to the "writing speed", i.e. the speed with which the combined energy beam is guided along the writing path, as described before. Thus, it is possible to adjust the at least one combined beam property of the combined energy beam independent of the scan velocity, i.e. independent of the velocity with which the combined energy beam is guided across the build plane.

The modulation unit may further be adapted to control at least one combined beam property dependent on a determined sensor parameter. Thus, a sensor may be provided that is adapted to determine a sensor parameter, such as a parameter relating to the conditions under which the additive manufacturing process is performed, for example an intensity distribution in the build plane or the intensity of at least one part of the combined energy beam or other process parameters present during the additive manufacturing process, such as residues determined in the atmosphere inside the build chamber or the process chamber, respectively, in which the additive manufacturing process is performed. Hence, a closed loop control of the combined beam property of the combined energy beam is feasible, wherein the sensor parameter may be determined continuously or in a defined point of time, wherein the combined beam property of the combined energy beam may be adjusted via the modulation unit taking the determined sensor parameter into calculation.

According to another preferred embodiment of the inventive apparatus, the modulation unit may be adapted to locally control the at least one combined beam property, in particular an intensity distribution and/or a spot geometry, dependent on the sensor parameter. The power or the intensity of the combined energy beam can be locally adjusted and/or or the geometry of the spot can be locally adjusted. Thus, in different positions in the build plane, it is possible to generate individual intensity distributions and/or spot geometries of the combined energy beam based on the sensor parameter that has been determined, as described before.

For example, the modulation unit may be adapted to control the at least one combined beam property, in particular an intensity distribution and/or a spot geometry, dependent on the detected residues. Thus, the intensity distribution in the build plane, i.e. the geometry of the spot of the combined energy beam can be adjusted dependent on various process parameters, in this example residues detected in the process chamber or in the additive manufacturing process, respectively. Thus, the geometry of the spot of the energy beam, i.e. the intensity distribution of the combined energy beam, can be chosen or adjusted dependent on the position or the location of residues, such as soot, smoke or smolder present in the process chamber. For example, it is possible to generate the intensity distribution in that positions on the build plane over which residues are detected can be taken into calculation, e.g. form the intensity distribution around detected residues. Of course, it is possible to form the intensity distribution or generate the combined energy beam with an intensity distribution in that the positions of detected residues are continuously updated and therefore, it is possible to irradiate all required regions in the build plane.

It is also possible to adjust the combined beam property, in particular the intensity distribution, dependent on a motion parameter, in particular an angle of deflection and/or an angle of incidence, of the beam guiding unit and/or the combined energy beam. For example, it is possible to take an elliptical behavior into calculation, e.g. an elliptical distortion, of the combined energy beam in the build plane, occurring due to different angles of deflection in different positions on the build plane. Thus, the intensity distribution can be adjusted accordingly, to assure that the desired intensity distribution can be generated in every position of the build plane independent of the angle of incidence or the deflection angle, for instance.

The apparatus can further be improved in that the modulation unit may be adapted to control the at least one combined beam property, in particular an intensity distribution, preferably an amount of energy deposited in at least one area of the build plane, dependent on at least one structural property of at least one corresponding part of the object and/or a support structure. Hence, the combined beam property of the combined energy beam, in particular the intensity distribution (that is directly related with the amount of energy that is deposited in the build material) can be controlled via the modulation unit to allow for irradiating different parts using different combined beam properties or a different intensity distribution for different parts of the object that is additively manufactured in the process and/or a support structure that supports the three-dimensional object during the additive manufacturing process. The control of the at least one combined beam property dependent on a structural property of the object and/or of a support structure, allows for locally varying the consolidation behavior and/or the structure of the support structure or the object to be additively built. In particular, a core and shell or skin and core irradiation is possible, wherein different combined beam properties are used to irradiate different regions of the build plane, such as a shell of the object and a core of the object, or support structures of the object, respectively.

Further, a focusing unit may be provided which may be adapted to focus the combined energy beam, wherein the modulation unit and the focusing unit are adapted to vary a size of an irradiation pattern at constant focal position. Thus, a combination of a focusing unit, such as a so-called z-shifter, for example a beam expander, can be combined with the use of coherent beam combining performed via the modulation unit. Thus, the irradiation pattern that is generated via the combined energy beam in the build plane, for example an energy spot can be varied in size, in particular magnified or reduced, without changing the focal position of the combined energy beam.

According to another embodiment of the inventive apparatus, the modulation unit may be adapted to adjust the combined beam property, in particular the polarization of the combined energy beam, dependent on at least one process parameter, in particular dependent on an absorption behavior of the build material and/or residues. Hence, dependent on various process parameters, for example the type of build material that is used in the additive manufacturing process and/or residues present in the additive manufacturing process, different ratios or different amounts of the combined energy beam can be absorbed in the process chamber before the combined energy beam is incident on the build material that is to be irradiated and consolidated. Hence, it is possible to adjust the combined beam property dependent on process parameters that relate to the absorption behavior of the build material and/or residues present in the additive manufacturing process. In particular it is possible to adjust the polarization of the combined energy beam, as the polarization significantly influences the absorption behavior of the build material or the absorption behavior of residues. In other words, it is possible to adjust the amount or the ratio of the combined energy beam that is absorbed in the build material or in residues present in the additive manufacturing process by varying the at least one combined beam property, in particular by varying the polarization of the combined energy beam.

Further it is possible that the combined beam property, in particular the intensity distribution, is adjusted to compensate an absorption of the combined energy beam in at least one region of the process chamber due to residues. Additionally or alternatively,, the combined beam property, in particular the polarization, may be adjusted in that an absorption of the combined energy beam by residues is reduced below a threshold value, in particular minimized.

Preferably, a determination unit may be provided that is adapted to determine at least one process parameter dependent on the polarization of radiation determined in the additive manufacturing process. The embodiment allows for a polarization dependent analysis of the additive manufacturing process, for example process parameters determined during the additive manufacturing process. For example, it is possible to adjust a defined polarization and determine the polarization dependent absorption. Further, polarization dependent effects, such as the reflection of the combined energy beam at metal surfaces, can be used to determine process parameters dependent on the polarization. In particular, the radiation that is used in the additive manufacturing process to determine the process parameter can be analyzed regarding the polarization of the radiation and therefore, concluding on the material at which it is reflected, in particular metal surfaces. Further, it is possible to separate radiation that is reflected at the build plane from thermally emitted radiation, e.g. emitted from a consolidation zone / melt pool, as the thermal radiation is not polarized, whereas the radiation that is reflected at the build plane, e.g. a part of the energy beam, is polarized.

It is possible to separate different types of radiation using the polarization of the different types of radiation. For example, thermal radiation which is unpolarized may be separated from other types of radiation, in particular polarized radiation, such as a part of the combined energy beam that is reflected at the build plane.

The modulation unit may further be adapted to combine at least two energy beams comprising a wavelength in a wavelength range between 200nm and 1100nm, preferably between 400nm and 575nm, in particular 532nm. And it is possible to combine any arbitrary radiation source, in particular irradiation elements, and use energy sources, for example dependent on the absorption behavior of the build material. It is further possible to use different radiation sources with different beam profiles. For example, a plurality of energy sources with lower intensity output can be combined to achieve a combined energy beam with a comparatively higher energy output and a defined beam profile.

Besides, the invention relates to an irradiation device for an apparatus for additively manufacturing three-dimensional objects, in particular an inventive apparatus, as described before, wherein a modulation unit and at least two irradiation elements are provided that are adapted to generate at least two energy beams, wherein the modulation unit is adapted to combine the at least two energy beams to a combined energy beam and to adjust at least one combined beam property of the combined beam.

Further, the invention relates to a method for operating an apparatus for additively manufacturing three-dimensional objects, in particular an inventive apparatus, as described before, wherein at least two energy beams generated via two irradiation elements are combined to a combined energy beam via a modulation unit, wherein at least one combined beam property of the combined energy beam is adjusted via the modulation unit.

Of course, all features, details and advantages described with respect to the inventive apparatus are fully transferable to the inventive irradiation device and the inventive method.

Exemplary embodiments of the invention are described with reference to the Fig. The Fig. are schematic diagrams, wherein
- Fig. 1: shows an inventive apparatus according to a first embodiment;
- Fig. 2: shows an inventive apparatus according to a second embodiment;
- Fig. 3: shows an irradiation pattern according to a first embodiment;
- Fig. 4: shows an irradiation pattern according to a second embodiment;
- Fig. 5: shows an irradiation pattern according to a third embodiment; and
- Fig. 6: shows an irradiation pattern according to a fourth embodiment.

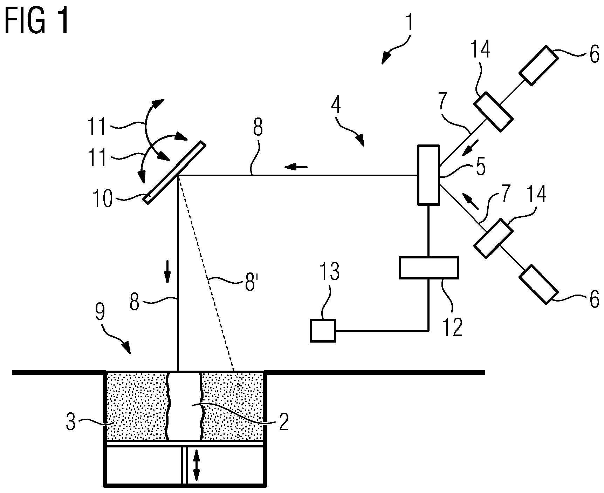

Fig. 1 shows an apparatus 1 for additively manufacturing three-dimensional objects 2 by means of successive layerwise selective irradiation and consolidation of layers of a build material 3 which can be consolidated by means of an energy source. The apparatus 1 comprises an irradiation device 4 that comprises a modulation unit 5 and a plurality of irradiation elements 6. Although only two irradiation elements 6 are depicted, the apparatus one may comprise an arbitrary number of irradiation elements 6. Each of the irradiation elements 6 is adapted to generate an energy beam 7 propagating towards the modulation unit 5. In other words, the at least two irradiation elements 6 are adapted to generate at least two energy beams 7, wherein of course the number of energy beams 7 is linked to the number of irradiation elements 6 provided for generating the energy beam 7.

The modulation unit 5 is adapted to combine the energy beams 7 incident on the modulation unit 5 to a combined energy beam 8 which can be guided onto a build plane 9 in which the build material 3 can be layerwise arranged or applied to be irradiated via the combined energy beam 8 to successively build the three-dimensional object 2. In the exemplary embodiment that is depicted in Fig. 1, the combined energy beam 8 is additionally guided onto the build plane 9 and moved across the build plane 9 via a beam guiding unit 10 (optional) that is built as scanner unit, for example a movable mirror, as indicated by arrows 11.

Further, the apparatus 1 comprises a control unit 12 that is connected with a sensor 13, which sensor 13 is adapted to determine at least one process parameter inside a process chamber of the additive manufacturing apparatus 1. Dependent on the process parameter, for example, residues generated in the additive manufacturing process or the intensity of the combined energy beam 8 or radiation that is emitted from the build plane 9, for example thermal radiation, a control of the modulation 5 via the control unit 12 feasible.

The modulation unit 5 is adapted to adjust at least one combined beam property defining the combined energy beam 8, for example an intensity of the combined energy beam 8 and/or an intensity distribution achieved via the combined energy beam 8 in the build plane 9 and/or a geometrical parameter, in particular a spot size and/or a spot shape, of the combined energy beam 8 and/or a position of the combined energy beam 8, in particular the position of a spot of the combined energy beam 8 in the build plane 9, and/or a focal position of the combined energy beam 8 and/or a polarization parameter of the combined energy beam 8. Of course, the list of possible combined beam properties is non-exhaustive. For example, the modulation unit 5 is adapted to compensate differences between a reference beam parameter and the combined beam property, for example for two positions of the combined energy beam 8, 8' in the build plane 9. Thus, a deviation from a reference behavior, such as an elliptical behavior of the combined energy beam 8' compared to the combined energy beam 8, due to a different angle of incidence on the build plane 9, can be compensated.

The modulation unit 5 in this exemplary embodiment is built as or comprises a diffractive optical element, such as a spatial light modulator that can adjust the combined energy beam 8 pixel wise. Further, the irradiation device 4 comprises two modulation elements 14 (optional) that are adapted to adjust beam parameters of the energy beams 7 as they are generated via the irradiation elements 6 before they are incident on the modulation unit 5. Thus, it is possible to perform a combination of a modulation of the energy beams 7 via the modulation elements 14 arranged in the beam paths of the energy beams 7 and to perform the modulation of the energy beams 7 by combining them via the modulation unit 5 resulting in the combined energy beam 8. The irradiation elements 6 are arranged in defined positions relative to the modulation unit 5, as in this exemplary embodiment the irradiation elements 6 arranged in the first diffraction order of the modulation unit 5 (optional). Thus, the modulation unit 5 and the irradiation elements 6 can be understood as irradiation assembly, as the positions of the irradiation elements 6 relative to the modulation unit 5 are fixed or the irradiation elements 6 and the modulation unit 5 are arranged in a defined spatial relationship, respectively.

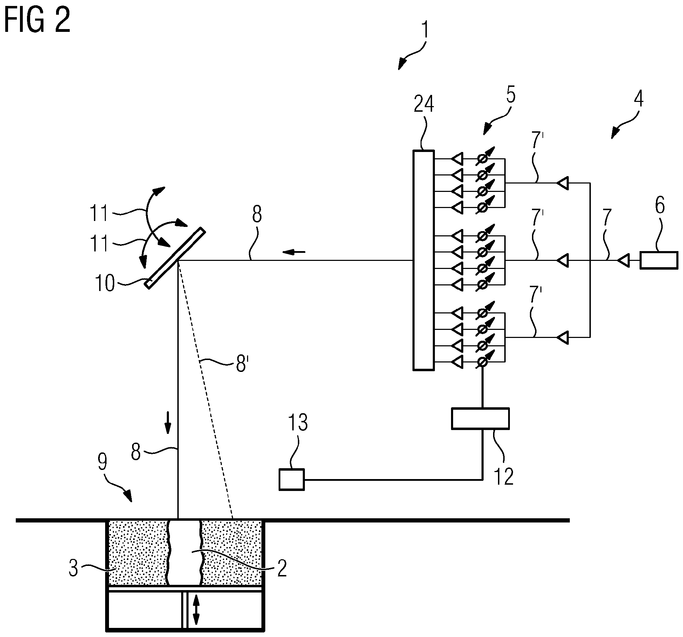

Fig. 2 shows an inventive apparatus 1 according to a second embodiment. As already described with respect to Fig. 1, the apparatus 1 is adapted to additively manufacture three-dimensional objects 2 by selectively consolidating build material 3. Deviant from the embodiment that is depicted in Fig. 1, the apparatus 1 that is depicted in Fig. 2 comprises an irradiation device 4 that comprises a single irradiation element 6, that is adapted to emit an energy beam 7. The irradiation element 6 according to the second embodiment may be deemed as "seed laser". The irradiation device 4 further comprises a number of optical amplifiers that are depicted as triangles.

The modulation unit 5 of the apparatus 1 according to the second embodiment comprises multiple the seed laser is divided into multiple energy beams 7' that can individually be controlled via the modulation unit 5. The modulation unit 5 comprises multiple phase modulators, wherein the individual energy beams 7', in particular individual laser beams 7', can be phase modulated via the phase modulators. The phase modulated energy beams 7' can afterwards be combined via a combination unit 24, for example an optical assembly adapted to combine the energy beams 7' in the far field, in particular in the build plane 9.

Hence, an interference pattern is generated in the build plane 9 as the individual energy beams 7' overlap and interfere with each other. Dependent on the phase of the individual energy beams 7' the position and the shape of the combined energy beam 8 can be controlled.

In other words, the irradiation pattern that is achieved in the build plane 9 can be controlled via the modulation unit 5 in that dependent on the desired irradiation pattern (intensity distribution) the phases of the individual energy beams 7' can be controlled. Thus, the individual pattern of the energy beams 7' that are arranged in the optical phased array or the degree to which each of the individual energy beam 7' contributes to the achieved irradiation pattern, can be controlled via the phase.

In other words, the irradiation pattern can be controlled by controlling the individual phases of the phase modulators of the modulation unit 5. Thus, the intensity distribution in the build plane 9 can be dynamically controlled via the phases of the individual phase modulators. Additionally or alternatively, it is also possible to move the intensity distribution, i.e. the irradiation pattern that is generated via the irradiation device 4 via the beam guiding unit 10. Hence, a (static) irradiation pattern may be generated that can be moved over the build plane 9 by the beam guiding unit 10. Of course, it is also possible to combine the static and dynamic generation of the irradiation pattern by controlling the phases via the individual phase modulators of the modulation unit 5 and overlay movement of the irradiation pattern over the build plane 9 via the beam guiding unit 10.

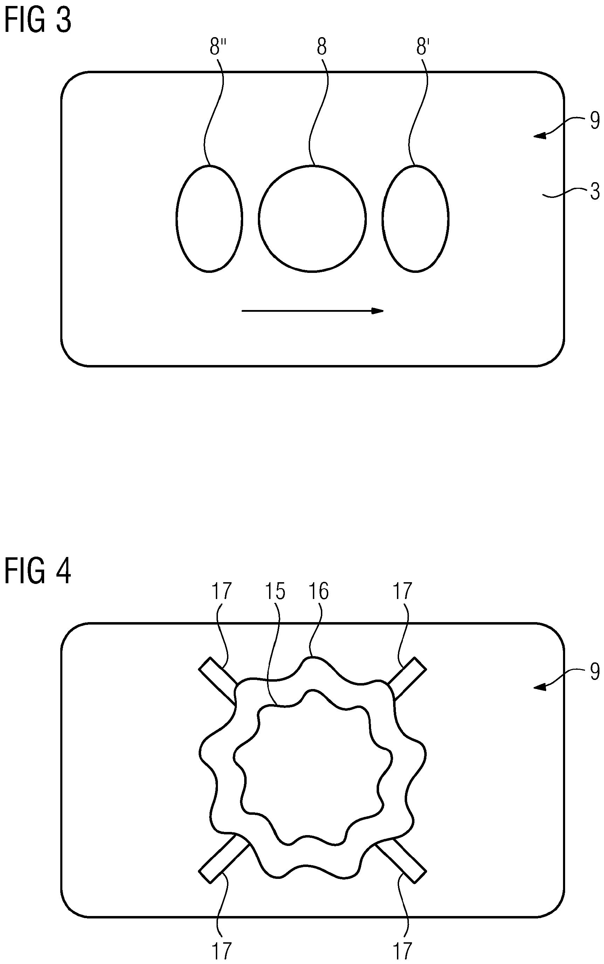

Fig. 3 shows a first embodiment of an irradiation pattern (in top view onto the build plane 9) that is generated via the combined energy beam 8 in the build plane 9. For example, a central part of the combined energy beam 8 is incident on the build plane 9 in a first position, wherein the modulation unit 5 is adapted to generate sub-parts, for example three sub-parts, of the combined energy beam 8 in the build plane 9. As described before, a central part of the combined energy beam 8 can be used to irradiate the build material 3 to consolidate the build material 3 to form the three-dimensional object 2. Another sub-part that is indicated with 8' can be used to pre-heat the build material 3, wherein of course the combined beam property for the central part of the combined energy beam 8 and the sub-part 8' can be chosen differently. In particular, it is possible to use a different spot shape and a different size and a different intensity for generating the different sub-parts 8, 8', 8". Another sub-part 8" may be used to post-heat the build material 3 arranged in the build plane 9 to control the consolidation behavior, e.g. the cooling behavior, of irradiated regions in the build plane 9. Of course, Fig. 3 shows only an exemplary embodiment of the inventive apparatus 1, in particular an irradiation pattern that can be generated via the inventive apparatus 1, wherein the number of sub-parts and the combined beam properties of the central part of the combined energy beam 8 and the other sub-parts 8', 8" can be chosen arbitrarily.

The central part of the combined energy beam 8 and the other sub-parts 8', 8"can be moved synchronously or individually across the build plane 9. Of course, the size and the size the intensity distribution of the central part of the combined energy beam 8 and the other sub-parts 8', 8" can be chosen dependent on the contour or the writing path that needs to be irradiated in the build plane 9 or dependent on other process parameters.

Fig. 4 shows a second exemplary embodiment of an irradiation pattern that is generated in the build plane 9 to form an object 2, wherein the intensity distribution generated via the combined energy beam 8 is adjusted via the modulation unit 5 to directly image the cross section of the object 2 on the build plane 9. In other words, the resulting irradiation pattern in the build plane 9 represents a cross-section of the object 2 that is to be irradiated in the current layer of build material 3. The combined beam property of the combined energy beam 8 is not constant over the cross-section of the object 2, but a core and shell irradiation is performed, wherein a first parameter set of the combined beam property is used to irradiate a first region 15 that can be deemed as core region of the object 2 and a second parameter set of the combined beam property is used to irradiate a second region 16 that can be deemed as shell region of the object 2. Thus, it is, for example, possible to generate the irradiation pattern using other combined beam properties defining the combined energy beam 8 in the first region 15 and in the second region 16, such as different intensities or intensity distributions or energies deposited within the respective regions 15, 16. Hence, the consolidation behavior and the mechanical properties of the object 2 in the specific regions 15, 16 can be adjusted. Further, Fig. 4 shows that support structures 17, supporting the object 2, can be irradiated based on another set of combined beam properties, wherein the irradiation pattern or the intensity distribution of the combined energy beam 8 in the build plane 9 can be chosen directly to irradiate the build material 3 to form the regions 15, 16 and the support structures 17 simultaneously, for instance. Of course, it is also possible to irradiate the regions 15, 16 and the support structures 17 not simultaneously, for example in succession or in any arbitrary other diffraction order.

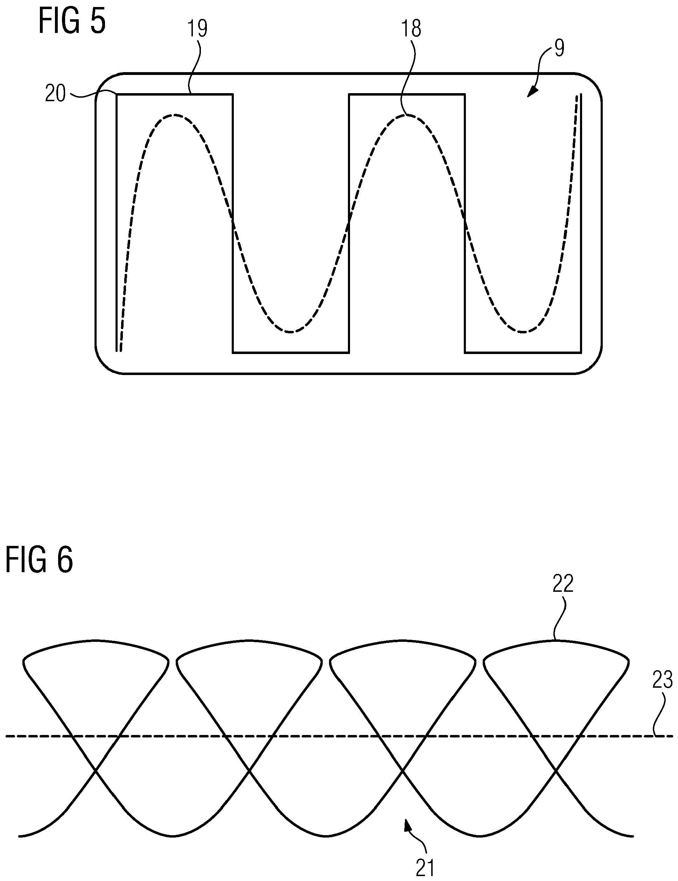

Fig. 5 shows a possible combination of a writing path that can be performed with the modulation unit 5 in the build plane 9, wherein it is possible to use the beam guiding unit 10 to move the combined energy beam 8 along a continuous and curvy path, for instance, which is represented via a dashed line 18. It is also possible to use the modulation unit 5 to guide the combined energy beam 8 along a writing path 19. For example, by directly influencing the position and the energy or intensity distribution of the combined energy beam 8, the modulation unit 5 is adapted to "guide" the combined energy beam 8 along a writing path 19 comprising sharp corners 20 or edges, for instance. Due to the generation of an interference pattern of the energy beams 7 in the build plane 9 via the modulation unit 5, it is possible to position the combined energy beam 8 very fast and guide the energy beam 8 very fast along the writing path 19, for instance. Of course, it is also possible to combine a writing path that is generated via the beam guiding unit 10 and a writing path that is generated via the modulation unit 5, as will be described with respect to Fig. 6.

Fig. 6 shows an irradiation pattern generated via the irradiation device 4, wherein a combined writing path 21 is achieved by combining a first writing path 22 the combined energy beam 8 is generated along or guided along via the modulation unit 5 and a second writing path 23, the combined energy beam 8 is guided along using the beam guiding unit 10. Hence, the modulation unit 5 may generate the combined energy beam 8 or guide the combined energy beam 8 along the writing path 22, for example to perform a fast wobble movement around a center position of the combined energy beam 8, wherein the center position of the combined energy beam 8 can moved along second writing path 23 via the beam guiding unit 10, that for example, performs a continuous deflection of the combined energy beam 8 across the build plane 9.

Of course, the inventive method can be performed on the inventive apparatus 1. Self-evidently, all details, features and advantages described with respect to the single embodiments are fully transferable and can arbitrarily be combined.

## Claims

1. Apparatus (1) for additively manufacturing three-dimensional objects (2) by means of successive layerwise selective irradiation and consolidation of layers of a build material (3) which can be consolidated by means of an energy beam, **characterized by** an irradiation device (4) that is adapted to generate at least two coherently stimulated energy beams (7), wherein the irradiation device (4) comprises a modulation unit (5) that is adapted to combine the at least two energy beams (7) to a combined energy beam (8) and to adjust at least one combined beam property of the combined energy beam (8).

2. Apparatus according to claim 1, **characterized in that** the modulation unit (5) is adapted to adjust the at least one combined beam property via an adjustment of at least one parameter of the modulation unit (5).

3. Apparatus according to claim 1 or 2, **characterized in that** the modulation unit (5) is adapted to adjust the at least one combined beam property over a defined length of the beam path of the combined energy beam (8), in particular over essentially the entire length of the energy beam path from the modulation unit (5) to the build plane (9).

4. Apparatus according to one of the preceding claims, **characterized in that** the at least one combined beam property relates to
- an intensity of the combined energy beam (8) and/or
- an intensity distribution of the combined energy beam (8) and/or
- a geometrical parameter, in particular a spot size and/or a spot shape, of the combined energy beam (8) and/or
- a position of the combined energy beam (8), in particular the position of a spot of the combined energy beam (8) in a build plane (9), and/or
- a focal position of the combined energy beam (8) and/or
- a polarization parameter of the combined energy beam (8).

5. Apparatus according to one of the preceding claims, **characterized in that** the modulation unit (5) is built as or comprises at least one controllable diffractive optical element, in particular at least one spatial light modulator.

6. Apparatus according to one of the preceding claims, **characterized by** at least one modulation element (14) adapted to adjust at least one parameter of at least one energy beam (7) generated via an irradiation element (6) or in that at least one irradiation element (6) is adapted to adjust the intensity of the energy beam (7) generated via the irradiation element (6) in advance to the modulation unit (5).

7. Apparatus according to one of the preceding claims, **characterized by** a beam guiding unit (10) adapted to guide the combined energy beam (8) in the build plane (9), wherein a control unit is adapted to combine, in particular to overlay, a movement of the combined energy beam (8) generated via the modulation unit (5), in particular a wobble movement, and a movement of the combined energy beam (8) generated via the beam guiding unit (10).

8. Apparatus according to one of the preceding claims, **characterized in that** the modulation unit (5) is adapted to generate at least two sub-parts (8, 8', 8") of the combined energy beam (8) at least partially incident in different regions of a build plane (9).

9. Apparatus according to one of the preceding claims, **characterized in that** the at least two irradiation elements (6) are arranged in defined position relative to the modulation unit (5), in particular arranged in directions corresponding to diffraction orders of the modulation unit (5).

10. Apparatus according to one of the preceding claims, **characterized in that** the modulation unit (5) is adapted to position at least one part of the combined beam in the build plane (9) via an adjustment to the structure of the modulation unit (5).

11. Apparatus according to one of the preceding claims, **characterized in that** the modulation unit (5) is adapted to control a focal position of the combined energy beam (8) independent of a position of a focusing optical element.

12. Apparatus according to one of the preceding claims, **characterized in that** the modulation unit (5) is adapted to adjust a geometry of at least one spot dependent on at least one part of a pattern that is to be irradiated, in particular to adjust a spot size to a dimension of the contour.

13. Apparatus according to one of the preceding claims, **characterized in that** the modulation unit (5) is adapted to combine at least two energy beams (7) comprising wavelengths in a wavelength range between 200nm and 1100nm, preferably between 400nm and 575nm, in particular 514nm or 532nm.

14. Irradiation device (4) for an apparatus (1) for additively manufacturing three-dimensional objects (2), in particular an apparatus (1) according to one of the preceding claims, **characterized in that** the irradiation device is adapted to generate at least two coherent energy beams (7), wherein the irradiation device (4) comprises a modulation unit (5) that is adapted to combine the at least two energy beams (7) to a combined energy beam (8) and to adjust at least one combined beam property of the combined energy beam (8).

15. Method for operating an apparatus (1) for additively manufacturing three-dimensional objects (2), in particular an apparatus (1) according to one of the claims 1 to 13, **characterized in that** at least two coherent energy beams (7) are generated, wherein the at least two energy beams (7) are combined via a modulation unit (5) to a combined energy beam (8), wherein at least one combined beam property of the combined energy beam (8) is adjusted.
